# EUROPEAN PATENT APPLICATION

(11) **EP 1 516 669 A1**
(43) Date of publication of application: **23.03.2005**
(21) Application number: 03255888.4
(22) Date of filing: 19.09.2003
(51) Int. Cl.: B01L 3/00, B65D 77/20

(54) **Apparatus for sealing tubes**

(71) Applicant: The Automation Partnership (Cambridge) Limited, Royston, Hertfordshire SG8 5WY (GB)
(72) Inventor: Smith, Philip Russell James, Cambridge (GB)
(74) Representative: Brunner, Michael John

(57) **Abstract**

Apparatus 10 for sealing an array of tubes 11 is provided. The apparatus 10 comprising: a defined storage plate support position defining a first plane X wherein a plate 12 containing an array of tubes 11 may be located, in use, an array of spring loaded pins 15 arranged beneath the plane of the plate 12 for pressing a number of the tubes 11 out of the first plane X and into a second plane Y above and parallel to the first plane X and in contact with a sealing membrane 16 disposed above the plate 12, a platen 17 relatively movable into contact with the sealing membrane 16 to cause the sealing membrane 16 to bond to the tops of the tubes 11 that have been raised from the first plane X to the second plane Y by the pins 15; and a die plate 18 with holes relatively movable past the second plane Y in which the newly sealed tubes 11 lie in order to pierce the sealing membrane 16 around each tube 11 and thus separate the sealed tubes from the remainder of the sealing membrane 16.

## Description

The present invention relates to the sealing tubes of and, in particular, to sealing large arrays of small tubes and separating the tubes from the sealing membrane used to provide the seals. In biological and chemical assay processes and systems which operate with tubes containing samples of biological or chemical material it is important that the contents of the tubes remain isolated from the atmosphere in the lab and during storage so that the contents do not evaporate or become contaminated with foreign bodies. Therefore it is common practice to seal tubes. This may be performed with a sealing membrane that, once punctured must be replaced, or it may be with a resealable membrane.

When the samples contained within the tubes are not subjected to frequent access then a sealing membrane that is not resealable is sufficient. The sealing membrane may take the form of a foil, backed with an adhesive that may be heat or pressure sensitive. In order to apply such a sealing membrane to a tube it is usual to bring the top of the tube into contact with a sealing membrane that has been treated with such an adhesive and then to apply heat or pressure, as applicable to cause the adhesive to adhere to the top of the tube. In general it is often necessary to seal a large number of tubes at the same time and therefore the sealing membrane is applied to an array of tubes that are localised in a support plate. However, the plates in which the tubes are placed are designed to make the most economical use of space possible and therefore the tops of the tubes are often in close contact. In order for tubes in such close contact to be effectively sealed it is necessary to have a very fine tool for separating the tubes. If the tool is insufficiently fine this can result in the integrity of the seal being compromised. A further problem is that very accurate registration and positioning of the tubes is essential.

As technology advances it is possible to process smaller samples and therefore there is a growing demand for smaller tubes, exacerbating these problems. This has led to the situation where it is difficult to seal and separate a large number of very small tubes held in a plate.

According to the present invention there is provided an apparatus for sealing an array of tubes, the apparatus comprising: a defined storage plate support position defining a first plane wherein a plate containing an array of tubes may be located, in use, an array of spring loaded pins arranged beneath the plane of the plate for pressing a number of the tubes out of the first plane and into a second plane above and parallel to the first plane and in contact with a sealing membrane disposed above the plate, a hot platen relatively movable into contact with the sealing membrane to cause the sealing membrane to bond to the tops of the tubes that have been raised from the first plane to the second plane by the pins; and a die plate with holes relatively movable past the second plane in which the newly sealed tubes lie in order to pierce the sealing membrane around each tube and thus separate the sealed tubes from the remainder of the sealing membrane.

The advantage of the checkerboard pattern is that, after punching, there is enough scrap sealing membrane left for it to remain intact with sufficient strength to be easily removed from the device without disintegration. This facilitates the use of the sealing membrane in the form of a continuous web that can be fed from a reel into the apparatus with the resultant scrap sealing membrane being wound onto a second reel. This offers considerable advantages over known systems which operate using individual rectangles of sealing membrane sized to match an array of tubes. As a result of the fragility of the membrane after the sealing, a system of this kind cannot be fully automated.

The holes in the die plate may be concentric with the tops of the tubes. The pins may be arranged in a checkerboard pattern.

The apparatus may further comprise an array of stripper pins above the second plane for moving the newly sealed tubes into the first plane.

Furthermore, according to the present invention there is provided a method of sealing an array of tubes the method comprising the steps of:
a. positioning an array of tubes in a plate above an array of spring loaded pins,
b. pressing a number of the tubes out of the plane of the plate and into contact with a sealing membrane disposed above the plate,
c. applying a hot platen to cause the sealing membrane to bond to the tops of the tubes;
d. applying a die plate to the array of newly sealed tubes in order to pierce the sealing membrane around each tube and thus separate the sealed tubes from the remainder of the sealing membrane,
e. retracting the pins to allow the newly sealed tubes to move into the plate,
f. indexing the plate such that the pins lie beneath unsealed tubes,
g. indexing the sealing membrane such that a new section of sealing membrane is above the unsealed tubes;
h. repeating steps (b) to (f) until all of the tubes have been sealed.

Preferably, the newly sealed tubes are moved into the plate by a second array of pins situated above the plane of the plate.

An example of the present invention will now be described with reference to the drawings in which:
Figure 1 shows an end view of the apparatus according to the present invention;
Figure 2 shows the apparatus of the present invention with a heater block in place;
Figure 3 shows the apparatus with an array of pins fully raised to push an array of tubes through a sealing membrane;
Figure 4 shows the apparatus of the present invention with the array of sealed tubes pushed down into a plate;
Figure 5 shows a plan view of one possible configuration of spring loaded pins;
Figure 6 shows a further example of the configuration of the pins;
Figure 7 shows sections of a sealing membrane once a set of tubes has been sealed.

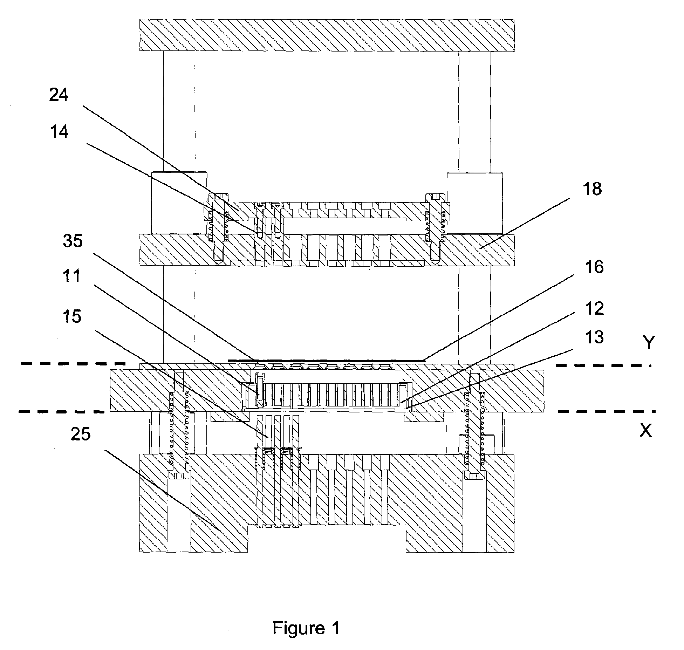

A cross-section of a sealing and cutting apparatus 10 is shown in Figure 1. An array of polypropylene tubes 11 is held in a plate 12 in a first plane X. The plate 12 is held in the plane X by a support 13. Above and below the plane X are arrays of spring loaded pins 14 and 15 held in respective platens 24, 25. Between the array of pins 14 and the plate 12, in use, a sealing membrane 16 is brought into position between a hot platen 17 and a die plate 18.

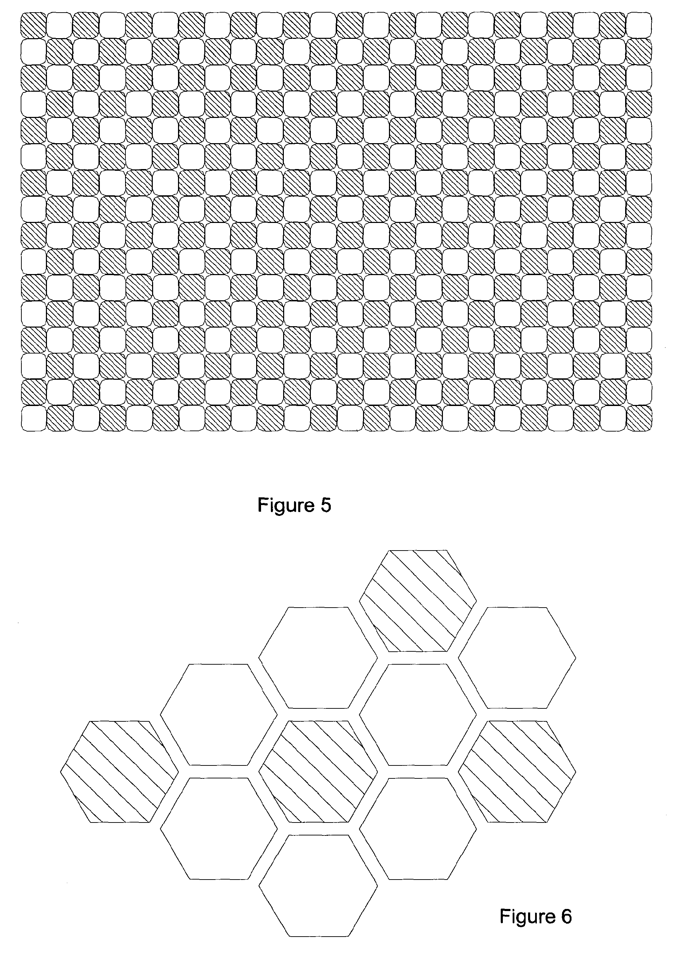

In use, the apparatus 10 is loaded with an array of tubes 11 to be sealed held in the plate 12. Half of the tubes, on a checkerboard pattern (shown in Figure 5) are raised by the upward movement of the platen 25 carrying the spring loaded pins 15 below the plate 12, into engagement with the pins 15, until the tops of the tubes 11 come into contact with the sealing membrane 16. This occurs in the plane Y in Figure 1. The pins 15 reach a stop 35 when the tubes 11 reach plane Y. This ensures that all of the tubes 11 are pushed into plane Y and prevents the tubes 11 moving too far. The contact between the pins 15 and the stop 35 holds the tubes 11 rigidly in plane Y

The sealing membrane 16 is foil, for example Abgene easy pierce foil, impregnated with an adhesive and preferably held on a roll and spooled through the apparatus in a left to right direction as seen in Figure 1.

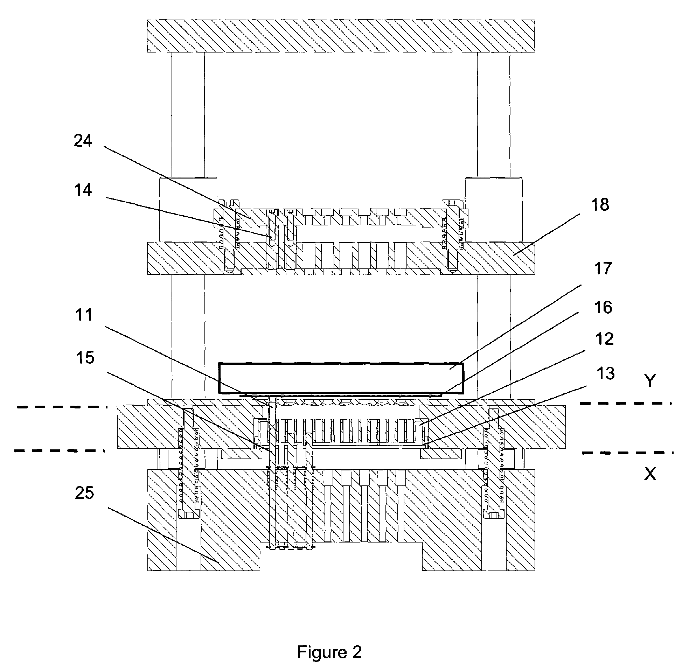

As shown in Figure 2, the hot platen 17 is then moved into position above the sealing membrane 16, perpendicular, in the horizontal plane, to the direction of motion of the sealing membrane 16. The platen 17 is then be moved downwards so that its lower surface lies in the plane Y. This melts the adhesive on the underside of the sealing membrane 16 and causes it to adhere to the tops of the tubes 11. Alternatively, the heat supplied by the platen 17 may be sufficient to begin to melt the tops of the tubes 11 allowing them to bond to the sealing membrane 16. The platen 17 is then moved upwardly and then out from the vicinity of the plate 12.

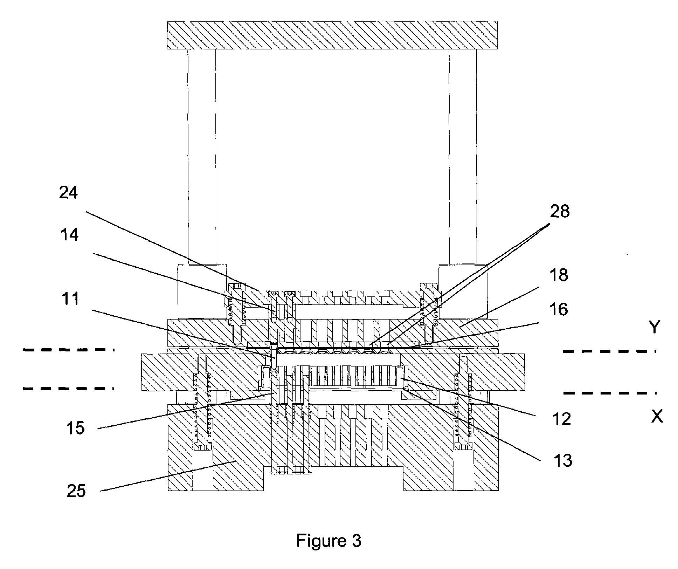

The newly sealed tubes 11 need to be separated from the remainder of the sealing membrane 16 and this operation is shown in Figure 3. A die plate 18 provided with a series of holes 28 that are concentric with the tubes 11 is thus moved into place above the tubes 11 which are pushed up through the die plate 18, the lower face of which is sharp to pierce the sealing member 16 around the tops of the tubes and detaching the tubes 11 from the remainder of the sealing membrane 16.

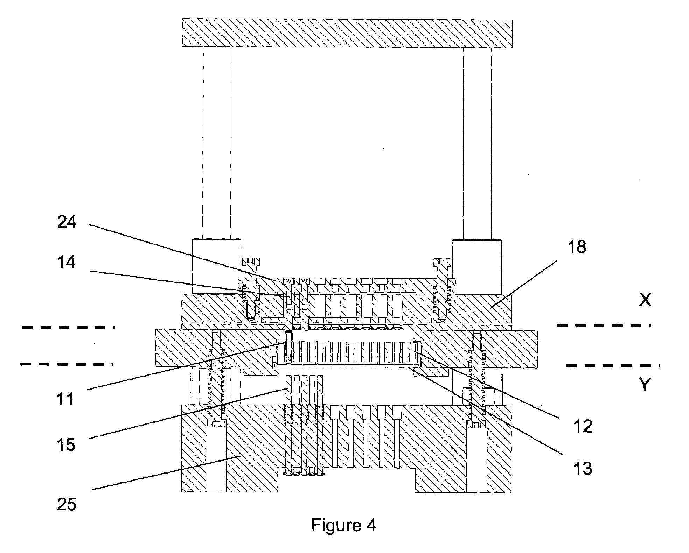

As shown in Figure 4, the newly sealed and punched out tubes 11 are then returned to plane X by the array of upper pins 14 which are lowered through the holes 28 in the die plate 18 to engage with the tubes 11. The plate 12 is then indexed by one tube's width in one horizontal direction, a new section of sealing membrane is drawn into plane Y and the process is repeated to seal the remaining tubes so that all of the tubes have been sealed. This may require four iterations of the procedure if the tubes 11 are perfectly square.

Figure 5 shows the checkerboard pattern of the tubes that are sealed at the same time. The tubes may have a circular or a square cross section and the die plate 18 will be shaped accordingly. In an alternative example the tubes are hexagonal and therefore a die plate 18 with hexagonal holes is required. It is apparent from Figure 6 that three iterations will be required to seal all of the tubes.

There are 384 tubes in a standard plate and therefore 192 are sealed and punched in half of the cycle in this example of the present invention. However, there are 200 holes in die plate and 200 of each type of pin: this is because the two halves of a checkerboard pattern are handed (mirror image) so that a single set of 192 pins cannot seal all 384 tubes. The extra eight pins provide an extra column to the checkerboard array so that both left and right handed halves of 192 are present within the checkerboard of the pattern of 200. To avoid punching eight unused pieces of foil on each half cycle sealing operation, when the stripper pins 14 push the tubes 12 back into the support, the end rows of the stripper pins only need operate on their required half. Alternatively, the eight punched pieces of foil need not be fully separated from the foil by the stripping action.

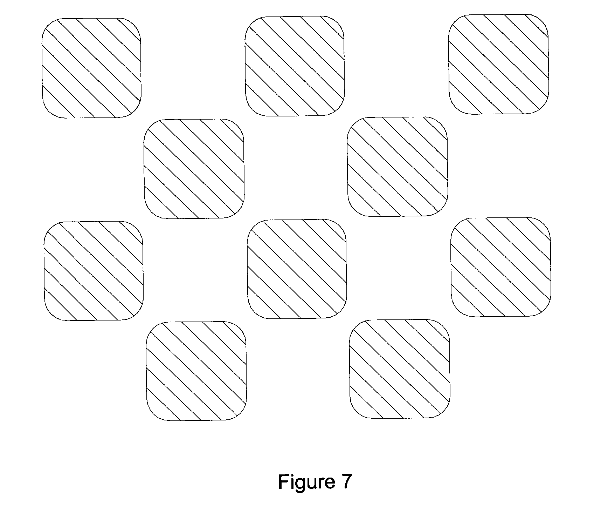

Figure 7 shows sections of the sealing membrane 16 after one set of tubes 11 have been sealed. The hatched sections representing the holes created by sealing one set of tubes.

## Claims

1. Apparatus for sealing an array of tubes, the apparatus comprising:
a defined storage plate support position defining a first plane wherein a plate containing an array of tubes may be located, in use,
an array of spring loaded pins arranged beneath the plane of the plate for pressing a number of the tubes out of the first plane and into a second plane above and parallel to the first plane and in contact with a sealing membrane disposed above the plate,
a platen relatively movable into contact with the sealing membrane to cause the sealing membrane to bond to the tops of the tubes that have been raised from the first plane to the second plane by the pins; and
a die plate with holes relatively movable past the second plane in which the newly sealed tubes lie in order to pierce the sealing membrane around each tube and thus separate the sealed tubes from the remainder of the sealing membrane.

2. Apparatus according to claim 1, wherein the platen seals the membrane to the tubes using heat.

3. Apparatus according to claim 1, wherein the platen seals the membrane to the tubes using pressure.

4. Apparatus according to any of claims 1 to 3, wherein the holes in the die plate are concentric with the tops of the tubes.

5. Apparatus according to any of claims 1 to 4, wherein the pins are arranged in a checkerboard pattern.

6. Apparatus according to any of claims 1 to 5, further comprising an array of stripper pins above the second plane for moving the newly sealed tubes into the first plane.

7. Apparatus according to any of claims 1 to 6, wherein the sealing membrane is a continuous web.

8. A method of sealing an array of tubes the method comprising the steps of:
(a) positioning an array of tubes in a plate above an array of spring loaded pins,
(b) pressing a number of the tubes out of the plane of the plate and into contact with a sealing membrane disposed above the plate,
(c) applying a platen to cause the sealing membrane to bond to the tops of the tubes;
(d) applying a die plate to the array of newly sealed tubes in order to pierce the sealing membrane around each tube and thus separate the sealed tubes from the remainder of the sealing membrane,
(e) retracting the pins and allowing the newly sealed tubes to move into the plate,
(f) indexing the plate such that the pins lie beneath unsealed tubes,
(g) indexing the sealing membrane such that a new section of sealing membrane is above the unsealed tubes;
(h) repeating steps (b) to (f) until all of the tubes have been sealed.

9. The method according to claim 7, wherein the newly sealed tubes are moved into the plate by a second array of pins situated above the plane of the plate.
